# EUROPÄISCHE PATENTSCHRIFT

(11) **EP 1 503 104 B1**
(45) Veröffentlichungstag und Bekanntmachung des Hinweises auf die Patenterteilung: **29.11.2006**
(21) Anmeldenummer: 04016646.4
(22) Anmeldetag: 15.07.2004
(51) Int. Cl.: F16F 15/131, F16D 13/58

(54) **Drehschwingungsdämpfer**
Torsional vibration damper
Amortisseur de vibrations torsionelles

(30) Priorität: 28.07.2003 DE 10334314
(43) Veröffentlichungstag der Anmeldung: 02.02.2005
(60) Teilanmeldung: 06004972.3
(73) Patentinhaber: LuK Lamellen und Kupplungsbau Beteiligungs KG, 77815 Bühl (DE)
(72) Erfinder: Jäckel, Johann, 77830 Bühlertal (DE); Zhou, Bin, 77815 Bühl (DE); Littlefair, Greig, 77815 Bühl (DE); Schwederle, Philippe, 67000 Strasbourg (FR)

(56) Entgegenhaltungen:
- DE-A- 3 909 892
- DE-A- 10 056 788
- DE-A- 19 955 736
- FR-A- 2 788 820

## Beschreibung

Die Erfindung betrifft ein geteiltes Schwungrad, mit wenigstens zwei entgegen dem Widerstand einer Energiespeichereinrichtung relativ zueinander verdrehbaren Schwungmassen, zwischen denen in einem Einbaubereich eine elastische Dichtmembraneinrichtung angeordnet ist, die eine Federkennlinie aufweist, die sich aus der Auftragung der Federkraft der Dichtmembraneinrichtung über dem Federweg ergibt.

Herkömmliche Drehschwingungsdämpfer bzw. geteilte Schwungräder sind oft mit Dichtmembraneinrichtungen ausgestattet, die eine relativ kurze, linear ansteigende Federkennlinie aufweisen. Dabei kann über den gesamten Einbaubereich eine große Kraftstreuung auftreten. Ein geteiltes Schwungrad mit einer solchen Dichtmembraneinrichtung ist durch die FR 2 788 820 A1 bekannt.

Aufgabe der Erfindung ist es daher, ein geteiltes Schwungrad, mit wenigstens zwei entgegen dem Widerstand einer Energiespeichereinrichtung relativ zueinander verdrehbaren Schwungmassen, zwischen denen eine elastisch verspannte Dichtmembraneinrichtung angeordnet ist, zu schaffen, der engere bzw. konstantere Grundhysterese-Anforderungen erfüllt als herkömmliche Drehschwingungsdämpfer.

Die Aufgabe ist bei einem geteilten Schwungrad, mit wenigstens zwei entgegen dem Widerstand einer Energiespeichereinrichtung relativ zueinander verdrehbaren Schwungmassen, zwischen denen in einem Einbaubereich eine elastische Dichtmembraneinrichtung angeordnet ist, die eine Federkennlinie aufweist, die sich aus der Auftragung der Federkraft der Dichtmembraneinrichtung über dem Federweg ergibt, dadurch gelöst, dass die Federkennlinie der Dichtmembraneinrichtung in dem Einbaubereich zunächst abfällt und dann ansteigt. Die Dichtmembraneinrichtung hat also eine Kennlinie wie eine Tellerfeder. Die Federkraft kann dadurch im Einbaubereich in engeren Grenzen gehalten werden als bei herkömmlichen Drehschwingungsdämpfern.

Ein bevorzugtes Ausführungsbeispiel des Drehschwingungsdämpfers ist dadurch gekennzeichnet, dass die Dichtmembraneinrichtung, die auch als Dichtfedereinrichtung bezeichnet werden kann, radial innen einen im Wesentlichen kreisringscheibenförmigen Innenkörper aufweist, der mit der einen Schwungmasse verbunden ist, und dadurch, dass die Dichtmembraneinrichtung radial außen einen im Wesentlichen kreisringscheibenförmigen Außenkörper aufweist, der an der anderen Schwungmasse anliegt.
Der Innenkörper ist vorzugsweise einstückig mit dem Außenkörper.

Ein weiteres bevorzugtes Ausführungsbeispiel des Drehschwingungsdämpfers ist dadurch gekennzeichnet, dass der Außenkörper, im Querschnitt betrachtet, im unbelasteten Zustand relativ zu dem Innenkörper in eine Richtung geneigt ist, und dadurch, dass der Außenkörper im eingebauten Zustand relativ zu dem Innenkörper in die entgegengesetzte Richtung geneigt ist. Der Außenkörper wird also im eingebauten Zustand über seine Planlage, in der er parallel zu dem Innenkörper angeordnet ist, hinaus in die entgegengesetzte Richtung wie im unbelasteten Zustand gedrückt.

Ein weiteres bevorzugtes Ausführungsbeispiel des Drehschwingungsdämpfers ist dadurch gekennzeichnet, dass der Außenkörper mit einer Vielzahl radialer Schlitze versehen ist, die in radialer Richtung innen und außen geschlossen ausgebildet sind. Dadurch werden radial innen und außen an dem Außenkörper geschlossene Kraftränder geschaffen, die zu einer Versteifung des Außenkörpers führen.

Ein weiteres bevorzugtes Ausführungsbeispiel des Drehschwingungsdämpfers ist dadurch gekennzeichnet, dass der Innenkörper mehrere Durchgangöffnungen aufweist und radial innen geschlossen ausgebildet ist. Die Durchgangöffnungen dienen zur Aufnahme von Befestigungselementen, mit denen der Innenkörper an der zugehörigen Schwungmasse befestigt wird. Der geschlossenen Kraftrand radial innen führt zu einer Versteifung der gesamten Dichtmembraneinrichtung.

Weitere Vorteile, Merkmale und Einzelheiten der Erfindung ergeben sich aus der nachfolgenden Beschreibung, in der unter Bezugnahme auf die Zeichnungen Ausführungsbeispiele im Einzelnen beschrieben sind. Dabei können die in den Ansprüchen und in der Beschreibung erwähnten Merkmale jeweils einzeln für sich oder in beliebiger Kombination erfindungswesentlich sein. Es zeigen:
- Figur 1: eine Dichtmembraneinrichtung in der Draufsicht;
- Figur 2: die Dichtmembraneinrichtung aus Figur 1 im Schnitt;
- Figur 3: einen Ausschnitt aus Figur 2 im belasteten und im unbelasteten Zustand;
- Figur 4: eine Kupplung mit einem integrierten Drehschwingungsdämpfer und einer Dichtmembraneinrichtung, wie sie in den Figuren 1 bis 3 dargestellt ist;
- Figur 5: die Federkennlinie der Dichtmembraneinrichtung aus den Figuren 1 bis 3.

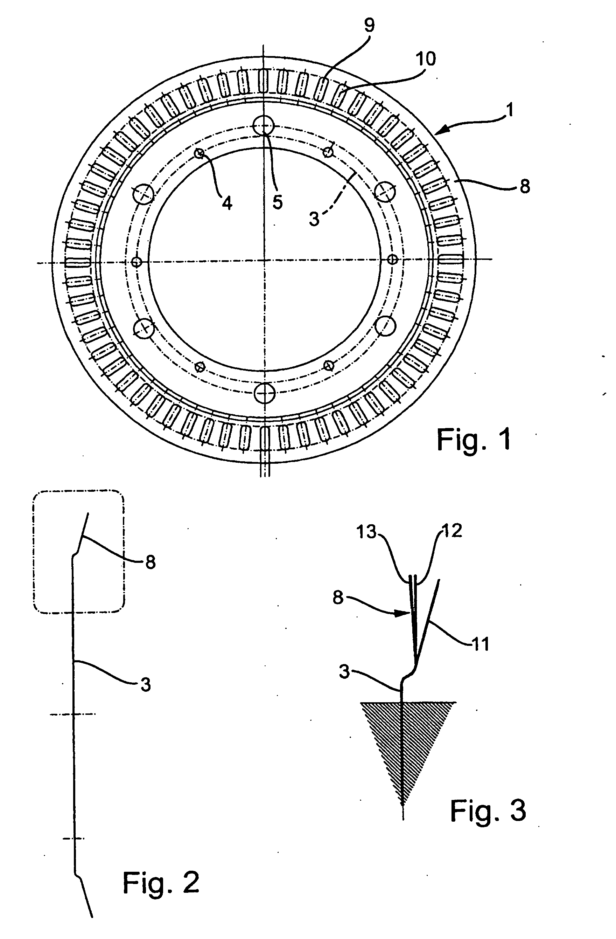

In Figur 1 ist eine Dichtmembraneinrichtung 1 in der Draufsicht dargestellt. Die Dichtmembraneinrichtung 1 ist elastisch ausgebildet und wird auch als Dichtfedereinrichtung, Tellerfedermembran oder kurz Dichtmembran bezeichnet. Die Dichtmembraneinrichtung 1 umfasst einen Innenkörper 3, der im Wesentlichen die Gestalt einer Kreisringscheibe aufweist, die mit mehreren Durchgangslöchern 4, 5 ausgestattet ist. Die Durchgangslöcher 4, 5 dienen zur Positionierung an der Dichtmembraneinrichtung 1 oder zum Befestigen der Dichtmembran 1 an einem anderen Bauteil. Der Innenkörper 3 ist einstückig mit einem Außenkörper 8 verbunden, der ebenfalls die Gestalt einer Kreisringscheibe aufweist. In dem Außenkörper 8 sind über den Umfang gleichmäßig verteilt eine Vielzahl von Schlitzen 9, 10 ausgebildet, die sowohl radial innen als auch radial außen durch den Außenkörper 8 begrenzt sind. Die Schlitze 9, 10 sind also in radialer Richtung sowohl nach außen als auch nach innen geschlossen.

In Figur 2 sieht man, dass der Außenkörper 8 relativ zu dem Innenkörper 3 abgewinkelt ist. Der Übergang zwischen dem Innenkörper 3 und dem Außenkörper 8 ist, im Querschnitt betrachtet, als gerundete Stufe ausgebildet.

In Figur 3 ist der Innenkörper 3 eingespannt dargestellt. Der Außenkörper 8 ist bei 11 im entlasteten Zustand dargestellt. Bei 12 ist der Außenkörper 8 in seiner Planlage dargestellt, in der der Außenkörper 8 parallel zu dem Innenkörper 3 angeordnet ist. Bei 13 ist der Außenkörper 8 im eingebauten Zustand dargestellt. Wie man in Figur 3 sieht, ist der Außenkörper 8 im eingebauten beziehungsweise eingespannten Zustand 13 aus dem entlasteten Zustand 11 über seine Planlage 12 hinaus überdrückt.

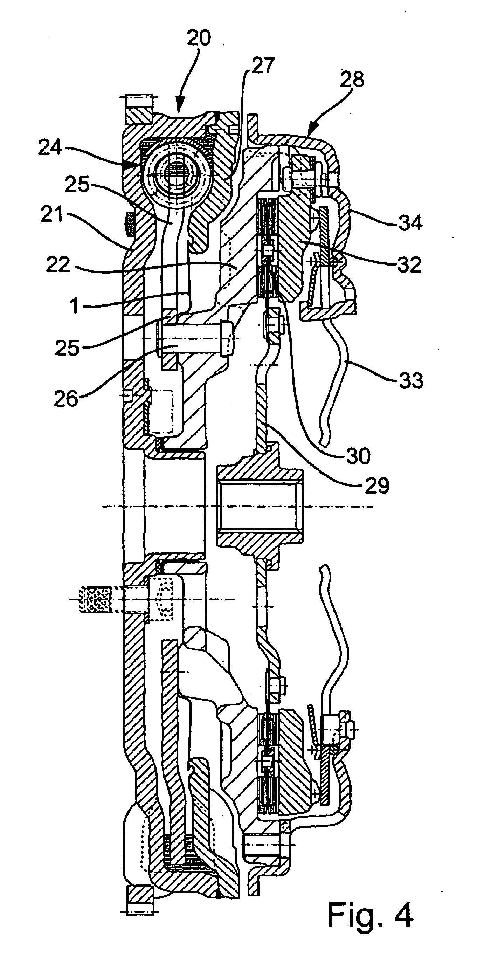

In Figur 4 ist ein Drehschwingungsdämpfer 20 dargestellt, der ein primäres Schwungrad 21 und ein sekundäres Schwungrad 22 umfasst. Die beiden Schwungräder 21 und 22, die auch als Schwungmassen bezeichnet werden, sind über mehrere in Umfangsrichtung verteilt angeordnete Energiespeicherelemente 24, die vorzugsweise von Schraubendruckfedern gebildet werden, miteinander gekoppelt. Das sekundäre Schwungrad 22 ist über einen Flansch 25, der durch Nietverbindungen 26 an dem sekundären Schwungrad 22 befestigt ist, mit diesem gekoppelt.

Die in den Figuren 1 bis 3 dargestellte Dichtmembraneinrichtung 1 ist mit ihrem Innenkörper zwischen dem Flansch 25 und der sekundären Schwungmasse 22 eingespannt. Der Außenkörper der Dichtmembraneinrichtung 1 liegt mit seinem Außenrand an einem Ausläufer 27 der primären Schwungmasse 21 an. Der Außenkörper der Dichtmembraneinrichtung 1 ist im eingebauten Zustand leicht überdrückt, also aus dem entlasteten Zustand über seine Planlage hinaus gebogen beziehungsweise abgewinkelt.

Die sekundäre Schwungmasse 22 bildet die Gegendruckplatte einer Kupplung 28, die eine Kupplungsscheibe 29 mit Reibbelägen 30 umfasst. Die Reibbeläge 30 sind zwischen der Gegendruckplatte 22 und einer Druckplatte 32 angeordnet, die mit Hilfe einer Tellerfedereinrichtung 33 relativ zu einem Kupplungsdeckel 34 in axialer Richtung bewegbar ist, um die Reibbeläge 30 der Kupplungsscheibe 29 zwischen der Druckplatte 32 und der Gegendruckplatte 22 einzuspannen. Der Aufbau und die Funktion einer Kupplung mit integriertem Drehschwingungsdämpfer werden als bekannt vorausgesetzt und daher hier nicht weiter erläutert.

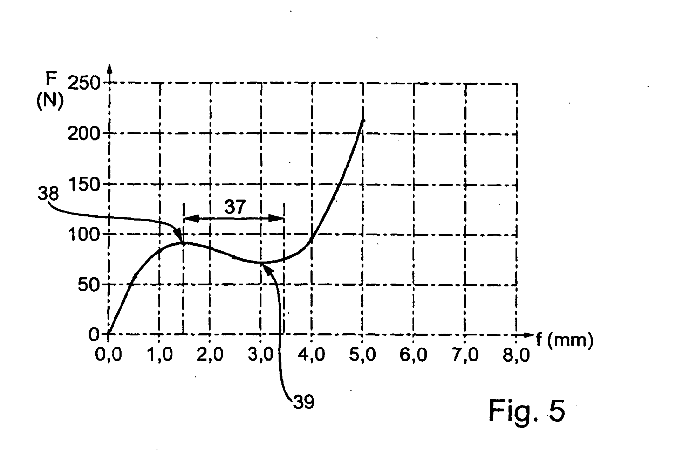

In Figur 5 ist die Federkraft F in Newton über dem Federweg f in Millimeter in Form einer Federkennlinie der in den Figuren 1 bis 4 dargestellten elastischen Dichtmembraneinrichtung 1 dargestellt. Der Einbaubereich ist mit 37 bezeichnet. Wie man in Figur 5 sieht, fällt die Federkennlinie im Einbaubereich 37 von einem relativen Maximum 38 zunächst bis zu einem relativen Minimum 39 ab und steigt dann wieder an. Die Federkennlinie der Dichtmembraneinrichtung verläuft in einem engeren Federkraftbereich als bei herkömmlichen Dichtmembraneinrichtungen, die in der Regel eine lineare Federkennlinie aufweisen.

Die in den Figuren 1 bis 4 dargestellte elastische Dichtmembraneinrichtung 1 ist vorzugsweise aus Blech gebildet, das vorzugsweise eine Dicke von 0,25 bis 0,3 Millimeter aufweist. Die Dichtmembraneinrichtung 1, die auch als Tellerfedermembrane bezeichnet wird, weist außen einen geschlossenen Rand auf, der auch als Kraftrand bezeichnet wird. Die Tellerfedermembrane 1 ist auch innen geschlossen ausgebildet. Der innen geschlossene Kraftrand verursacht eine Versteifung des gesamten Bauteils, so dass die Dichtmembraneinrichtung 1 beziehungsweise die Tellerfeder viel höher aufgestellt werden kann und kein Schnappeffekt auftritt. Die Tellerfeder beziehungsweise Dichtmembraneinrichtung braucht keine zusätzliche Unterstützung, wie zum Beispiel bei Tellerfedern mit Zungen. Die Streuung der Federkraft in der in Figur 5 dargestellten Federkennlinie liegt zwischen 70 Newton und 90 Newton und kann eventuell durch eine Veränderung der Aufstellhöhe angepasst werden.

### Bezugszeichenliste

- 1: Dichtmembraneinrichtung
- 2: -
- 3: Innenkörper
- 4: Durchgangslöcher
- 5: Durchgangslöcher
- 6: -
- 7: -
- 8: Außenkörper
- 9: Schlitze
- 10: Schlitze
- 11: Außenkörper im entlasteten Zustand
- 12: Planlage
- 13: Außenkörper im eingespannten Zustand
- 20: Drehschwingungsdämpfer
- 21: Primäres Schwungrad
- 22: Sekundäres Schwungrad
- 24: Energiespeicherelemente
- 25: Flansch
- 26: Nietverbindungen
- 27: Ausläufer
- 28: Kupplung
- 29: Kupplungsscheibe
- 30: Reibbeläge
- 31: -
- 32: Druckplatte
- 33: Tellerfedereinrichtung
- 34: Kupplungsdeckel
- 35: -
- 36: -
- 37: Einbaubereich
- 38: Relatives Maximum Einbaubereich
- 39: Relatives Minimum Einbaubereich

## Patentansprüche

1. Geteiltes Schwungrad mit wenigstens zwei entgegen dem Widerstand einer Energiespeichereinrichtung (24) relativ zueinander verdrehbaren Schwungmassen (22, 32), zwischen denen eine elastische Dichtmembraneinrichtung (1) angeordnet ist, **dadurch gekennzeichnet, dass** die Dichtmembraneinrichtung (1) eine Kraft-Weg-Federkennlinie (Figur 5) aufweist, die nach Erreichen eines Kraftmaximums (38) in einen Einbaubereich (37) übergeht, der eine geringe Kraftstreuung aufweist, und die in dem Einbaubereich (37) zunächst abfällt und dann ansteigt, wodurch die durch die Dichtmembraneinrichtung (1) bei einer Relativverdrehung der Schwungmassen (22, 32) erzeugte Grundhysterese in engeren Grenzen gehalten werden kann.

2. Geteiltes Schwungrad nach Anspruch 1, **dadurch gekennzeichnet, dass** die Federkennlinie der Dichtmembraneinrichtung nach Erreichen eines Kraftmaximums (38) bis zum Erreichen eines Kraftminimums (39) einen abfallenden Einbaubereich (37) aufweist, der in einem engen Federkraftbereich verläuft.

3. Schwungrad nach Anspruch 1 oder 2, **dadurch gekennzeichnet, dass** die Dichtmembraneinrichtung (1) radial innen einen im Wesentlichen kreisringscheibenförmigen Innenkörper (3) aufweist, der mit der einen Schwungmasse (21) verbunden ist, und **dadurch**, dass die Dichtmembraneinrichtung (1) radial außen einen im Wesentlichen kreisringscheibenförmigen Außenkörper (8) aufweist, der an der anderen Schwungmasse (22) anliegt.

4. Schwungrad nach einem der Ansprüche 1 bis 3, **dadurch gekennzeichnet, dass** der Außenkörper (8), im Querschnitt betrachtet, im unbelasteten Zustand relativ zu dem Innenkörper (3) in eine Richtung (11) geneigt ist, und **dadurch**, dass der Außenkörper (8) im eingebauten Zustand relativ zu dem Innenkörper in die entgegengesetzte Richtung (13) geneigt ist.

5. Schwungrad nach einem der vorhergehenden Ansprüche, **dadurch gekennzeichnet, dass** der Außenkörper (8) mit einer Vielzahl radialer Schlitze (9, 10) versehen ist, die in radialer Richtung innen und außen geschlossen ausgebildet sind.

6. Schwungrad nach einem der vorhergehenden Ansprüche, **dadurch gekennzeichnet, dass** der Innenkörper (3) mehrere Durchgangsöffnungen (4, 5) aufweist und radial innen geschlossen ausgebildet ist.

## Claims

1. A divided flywheel having at least two centrifugal masses (22, 32) that are rotatable relative to each other against the resistance of a memory storage device (24), between which an elastic sealing membrane device (1) is positioned, **characterized in that** the sealing membrane device (1) has a force-distance spring load deflection characteristic (Figure 5) which, after a maximum force (38) is reached, passes over to an insertion range (37) that has a smaller dispersion of force, and which in the insertion range (37) first drops off and then rises, whereby the basic hysteresis produced by the sealing membrane device (1) when there is relative rotation of the centrifugal masses (22, 32) can be held within tighter bounds.

2. A divided flywheel according to Claim 1, **characterized in that** the spring load deflection characteristic of the sealing membrane device has a declining insertion range (37) after a maximum force (38) is reached until a minimum force (39) is reached, which runs in a narrow spring force range.

3. A flywheel according to Claim 1 or 2, **characterized in that** the sealing membrane device (1) has radially on its inside an essentially circular ring-disk-shaped internal body (3) which is connected to the one centrifugal mass (21), and **in that** the sealing membrane device (1) has radially on its outside an essentially circular ring-disk-shaped external body (8) which is in contact with the other centrifugal mass (22).

4. A flywheel according to one of Claims 1 through 3, **characterized in that** the external body (8), regarded in cross section, is inclined in a direction (11) relative to the internal body (3) in the unloaded state, and **in that** the external body (8) is inclined in the opposite direction (13) relative to the internal body in the installed state.

5. A flywheel according to one of the preceding claims, **characterized in that** the external body (8) is provided with a large number of radial slits (9, 10), which are formed closed inside and outside in the radial direction.

6. A flywheel according to one of the preceding claims, **characterized in that** the internal body (3) has a plurality of through openings (4, 5) and is formed radially closed on the inside.

## Revendications

1. Volant moteur divisé comprenant au moins deux masses d'inertie (22, 32) pouvant être en torsion l'une par rapport à l'autre, en s'opposant à la résistance d'un dispositif à accumulateur d'énergie (24), masses d'inertie entre lesquelles est disposé un dispositif élastique à membrane d'étanchéité (1),
**caractérisé en ce que** le dispositif à membrane d'étanchéité (1) présente une courbe caractéristique de ressort concernant la force / la course (figure 5), courbe caractéristique de ressort qui, après avoir atteint un maximum de force (38), passe dans une zone de montage (37) qui présente une faible dispersion de force, et qui diminue d'abord dans la zone de montage (37) puis augmente, grâce à quoi l'hystérésis de base produite par le dispositif à membrane d'étanchéité (1), lors d'une torsion relative des masses d'inertie (22, 32), peut être maintenue dans des limites plus étroites.

2. Volant moteur divisé selon la revendication 1, **caractérisé en ce que** la courbe caractéristique du ressort du dispositif à membrane d'étanchéité, après avoir atteint un maximum de force (38) et atteint un minimum de force (39), présente une zone de montage diminuant (37) qui s'étend dans une zone de force, étroite, du ressort.

3. Volant moteur selon la revendication 1 ou 2, **caractérisé en ce que** le dispositif à membrane d'étanchéité (1) présente, à l'intérieur dans le sens radial, un corps intérieur (3) pratiquement en forme de rondelle annulaire qui est reliée à l'une des masses d'inertie (21), et **en ce que** le dispositif à membrane d'étanchéité (1) présente, à l'extérieur dans le sens radial, un corps extérieur (8) pratiquement en forme de rondelle annulaire, corps extérieur qui est en appui sur l'autre masse d'inertie (22).

4. Volant moteur selon l'une quelconque des revendications 1 à 3, **caractérisé en ce que** le corps extérieur (8), vu en coupe transversale, est, à l'état non sollicité, incliné dans une direction (11), par rapport au corps intérieur (3), et **en ce que** le corps extérieur (8), à l'état monté, est incliné dans la direction opposée (13), par rapport au corps intérieur.

5. Volant moteur selon l'une quelconque des revendications précédentes, **caractérisé en ce que** le corps extérieur (8) est doté d'une multiplicité de fentes radiales (9, 10) qui sont configurées en étant fermées, à l'intérieur et à l'extérieur dans le sens radial.

6. Volant moteur selon l'une quelconque des revendications précédentes, **caractérisé en ce que** le corps intérieur (3) présente plusieurs ouvertures de passage (4, 5) et est configuré en étant fermé, à l'intérieur dans le sens radial.
